# FASCICULE DE BREVET EUROPEEN

(11) **EP 1 769 950 B1**
(45) Date de publication et mention de la délivrance du brevet: **18.11.2009**
(21) Numéro de dépôt: 06366004.7
(22) Date de dépôt: 13.09.2006
(51) Int. Cl.: E01H 1/05, B60G 9/04, B60G 15/06, E01H 1/02, B62D 7/15, B62D 9/00

(54) **Dispositif porte-balai et véhicule de nettoyage équipé d'un tel dispositif**
Bürstenhaltevorrichtung und Reinigungsfahrzeug mit einer solchen Vorrichtung
Brush holding device and cleaning vehicle with such a device

(30) Priorité: 28.09.2005 FR 0509875; 16.11.2005 FR 0511587; 24.11.2005 FR 0511875
(43) Date de publication de la demande: 04.04.2007
(60) Demande divisionnaire: 09007334.7
(73) Titulaire: Mathieu, 54200 Toul (FR)
(72) Inventeur: Rouxel, Antoine, 54200 Toul (FR); Desreumaux, Yann, 54520 Laxou (FR)
(74) Mandataire: Poupon, Michel

(56) Documents cités:
- DE-A1- 10 106 471
- US-A- 4 754 521

## Description

L'invention concerne un nouveau dispositif porte-balai pour véhicule de balayage-nettoyage de voirie.

Plus particulièrement ce dispositif permet d'augmenter la surface de balayage, ce qui est particulièrement nécessaire dans le cas de véhicules étroits.

Ce nouveau dispositif peut équiper aussi bien les balayeuses de voirie que des véhicules multifonctions pour le nettoyage de voirie, c'est-à-dire des balayeuses équipées d'accessoires pour effectuer en plus du balayage, une ou plusieurs autres fonctions comme le lavage, l'aspiration de l'eau résiduelle ou autre...

Aujourd'hui dans le balayage de voirie, il existe deux concepts de balayage distincts, à savoir un concept à balais tirés qui présente l'avantage d'orienter les déchets directement vers la buse d'aspiration, et un concept à balais poussés qui permet à l'utilisateur de visualiser et d'atteindre aisément le déchet à nettoyer.

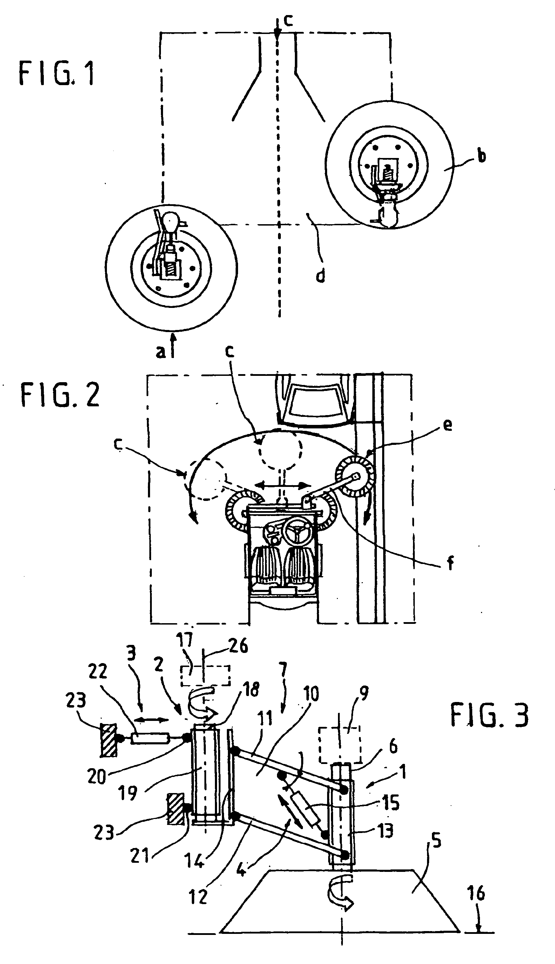

Chacune de ces solutions présente un inconvénient qui constitue l'avantage de l'autre ; ceci est schématisé en figure 1 sur laquelle est représentée côté gauche une demie machine avec un balai poussé (a) qui est éloigné de la buse d'aspiration (c) d'un véhicule (d) et côté droit une demie machine avec un balai tiré (b) ne permettant pas d'atteindre un déchet facilement.

Pour palier l'inconvénient des véhicules à balais tirés, on prévoit généralement d'ajouter en option un balai de recherche, appelé "3^{ème} balai" référencé (e) sur la figure 2 et monté sur un bras articulé (f) apte à se déplacer sur toute la largeur avant du véhicule. La fonction de ce 3^{ème} balai, appelée fonction "RECHERCHE" est d'augmenter la surface de balayage et de ramener les déchets vers les balais principaux, ces derniers ayant pour fonction de diriger lesdits déchets vers la buse d'aspiration.

Le problème technique proposé est de développer un dispositif de type "balai tiré" capable d'intégrer une fonction balai poussé afin d'augmenter la surface de balayage. En outre, ce dispositif doit être simple et économiquement réalisable.

Ce problème est résolu par l'invention qui consiste en un dispositif porte-balai pour véhicule de nettoyage de voirie, pouvant équiper par exemple les balayeuses de voirie ou tout autre véhicule automoteur de nettoyage multifonctions pour les voiries, du type comportant un moteur entraînant un balai ou une brosse circulaire entraînée en rotation autour d'un axe vertical, le dispositif comportant:
- un bras portant une brosse circulaire et un premier moyen de rotation permettant une rotation de 360° de la brosse autour de son axe central vertical,
- un deuxième moyen de rotation permettant un pivotement du bras portant la brosse circulaire autour d'une direction verticale
- un moyen de réglage de l'angle d'inclinaison latérale dudit bras par rapport à la verticale,
- un moyen de relevage de la brosse, ledit moyen de relevage étant intégré audit bras, caractérisé en ce que le deuxième moyen de rotation permet un pivotement du bras autour de la direction verticale selon un angle pouvant aller jusqu'à 360°.

L'ensemble des moyens du dispositif agissent en combinaison pour que ledit balai puisse être poussé ou tiré par le véhicule au cours de son déplacement.

L'art antérieur connaît le document US A 754 521 qui décrit un véhicule de balayage de voirie présentant un bras porte balai permettant le déplacement du balai par pivotement dudit bras, mais ce pivotement est limité à 180°.

L'art antérieur connaît également le document DE 101 06 471 selon lequel un système de parallélogramme permet de déplacer un balai rotatif, mais ce déplacement est rectiligne.

Par conséquent la combinaison desdits documents ne conduit pas à l'invention.

On comprendra mieux l'invention à l'aide de la description ci-après faite en référence aux figures annexées suivantes :
- la figure 1 est un schéma de principe en vue de dessus montrant deux demi-vues de véhicules de l'art antérieur montrant les positions d'un "balai tiré" et d'un "balai poussé" par rapport à la buse d'aspiration du véhicule de nettoyage,
- la figure 2 est un schéma montrant en vue de dessus, un véhicule de balayage de l'art antérieur à balais tirés, équipé d'un 3^{ème} balai de recherche,
- la figure 3 est un schéma de principe et en vue de face d'un dispositif porte-balai selon l'invention,
- la figure 4 est un schéma de principe du dispositif de la figure 3, en vue de dessus, et montrant le même bras selon l'invention dans deux positions différentes de travail,
- la figure 5 montre en détail un même dispositif porte-balai selon l'invention et sur une même figure, le même balai en position poussée et en position tirée et subissant un choc frontal par rapport au déplacement du véhicule,
- les figures 6 et 7 montrent le principe d'un dispositif de sécurité à ressort prévu sur le dispositif porte-balai selon l'invention.

Il est tout d'abord précisé que les termes "brosse" ou "balai" ont dans la suite du texte une signification équivalente, ces deux moyens ne différent l'un de l'autre que par la hauteur des poils qui les constituent.

Selon la figure 3, le dispositif porte-balai selon l'invention réalise cinq fonctions grâce aux moyens essentiels suivants agissant en combinaison :
- un premier moyen de rotation (1) classique d'une brosse circulaire (5) à axe central vertical (6) à 360°, autour de son axe central,
- un deuxième moyen de rotation (2), autour d'un axe vertical (26) d'un bras (7) portant la brosse circulaire (5), pour un mouvement pouvant varier jusqu'à 360°,
- un moyen de réglage (3) de l'angle d'inclinaison latérale dudit bras (7) par rapport à la verticale,
- un moyen de relevage (4) de la brosse, ledit moyen étant intégré audit bras (7).

Selon un mode de réalisation préféré représenté sur les figures :
- le premier moyen de rotation (1) est constitué classiquement d'un moteur hydraulique (9) entraînant directement l'axe (6) de la brosse circulaire (5),
- le bras support (7) est constitué d'un système à parallélogramme (10) déformable dans un plan vertical, dont les deux barres de longueur fixe (11, 12) sont montées à pivotement d'une part sur un support vertical (13) maintenant l'axe (6) et d'autre part sur une fixation (14) du deuxième moyen de rotation. Le relevage de la brosse par rapport au sol est commandé, par exemple, par un vérin linéaire (15) monté, par exemple, entre la barre supérieure (11) et le support d'axe (13).
- Le deuxième moyen de rotation (2) assure le pivotement du bras (7) selon un angle (α) pouvant aller jusqu'à 360° autour de la verticale et il est constitué, préférentiellement mais non limitativement, d'un vérin rotatif (17) dont l'axe (18) solidaire de la fixation (14) supporte le bras (7), ledit axe (18) étant porté verticalement par un corps (19) fixé au châssis (23) par deux points de fixations (20, 21), dont un point de fixation haut (20) et un point de fixation bas (21). L'inclinaison latérale du bras (7) est par exemple commandée par un vérin linéaire (22) monté entre le châssis et le point de fixation haut (20), lui-même commandé depuis le poste de conduite du véhicule. Le vérin rotatif (17) pourrait par exemple être remplacé par un système à bielle.

En outre, on prévoit préférentiellement sur chaque dispositif porte-balai, un ressort d'effacement (24), combiné à un pivot (29) permettant le pivotement du système à parallélogramme dans un plan vertical.

En effet, lorsque les balais sont poussés, ils devancent le porteur et il y a donc risque de collision frontale avec un obstacle. Un dispositif de sécurité est donc nécessaire.

Celui-ci entre en action lors d'un choc sur le plateau de la brosse provoquant la compression d'un ressort par la rotation autour du pivot (29). Le support (30) de la brosse s'incline alors sans que le reste du système n'en soit affecté.

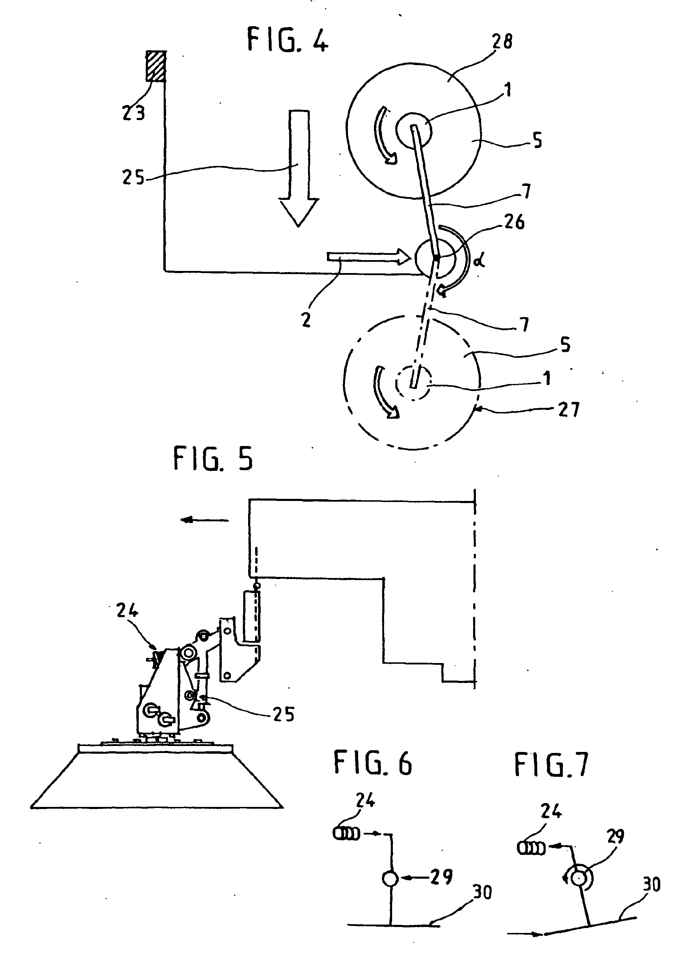

La figure 4 montre, en vue de dessus, et par rapport au sens du déplacement (25) du véhicule porteur que le même bras (7) en pivotant d'un angle (α) autour de l'axe de rotation (26) du deuxième moyen de rotation (2) peut travailler comme un balai poussé (27) ou comme un balai tiré (28).

Le pivotement du bras (7) et son blocage en position est commandé depuis le poste de conduite du véhicule et il est par exemple préférentiellement limité à 270° et peut-être bloqué dans toute position intermédiaire que le conducteur du véhicule choisit en fonction de la zone de balayage qu'il désire atteindre.

On peut également prévoir une sécurité supplémentaire permettant d'escamoter le balai en cas de collision latérale avec un mur ou une bordure de trottoir.

Bien entendu des variantes d'exécution peuvent exister sans pour autant sortir du cadre de l'invention revendiquée.

## Revendications

1. Dispositif porte-balai pour véhicule de nettoyage de voirie, pouvant équiper par exemple les balayeuses de voirie ou tout autre véhicule automoteur de nettoyage multifonctions pour les voiries, du type comportant un moteur entraînant un balai ou une brosse circulaire entraînée en rotation autour d'un axe vertical, le dispositif comportant:
- un bras (7) portant une brosse circulaire (5) et un premier moyen de rotation (1) permettant une rotation de 360° de la brosse (5) autour de son axe central vertical (6),
- un deuxième moyen de rotation (2) permettant un pivotement du bras (7) portant la brosse circulaire (5) autour d'une direction verticale
- un moyen de réglage (3) de l'angle d'inclinaison latérale dudit bras (7) par rapport à la verticale,
- un moyen de relevage (4) de la brosse, ledit moyen de relevage (4) étant intégré audit bras (7), **caractérisé en ce que** le deuxième moyen de rotation (2) permet un pivotement du bras (7) autour de la direction verticale selon un angle pouvant aller jusqu'à 360°
l'ensemble des moyens du dispositif agissant en combinaison pour que ledit balai puisse être poussé ou tiré par le véhicule au cours de son déplacement.

2. Dispositif selon la revendication 1, **caractérisé en ce que** le bras support (7) est constitué d'un système à parallélogramme (10) déformable dans un plan vertical, comportant deux barres de longueur fixe (11, 12) montées à pivotement d'une part sur un support vertical (13) maintenant l'axe (6) et d'autre part sur une fixation (14) du deuxième moyen de rotation.

3. Dispositif selon la revendication 2, **caractérisé en ce que** le relevage de la brosse par rapport au sol est commandé par un vérin linéaire (15) monté entre une barre supérieure (11) du système à parallélogramme (10) et un support vertical (13) de l'axe central vertical (6) de la brosse (5).

4. Dispositif selon l'une des revendications 1 à 3, **caractérisé en que** le dispositif porte-balais comporte un ressort d'effacement du balai en cas de choc frontal.

5. Dispositif selon l'une des revendications 1 à 4, **caractérisé en ce que** le deuxième moyen de rotation (2) est constitué d'un vérin rotatif (17).

6. Dispositif selon l'une des revendications 1 à 5, **caractérisé en ce que** le moyen de réglage (3) de l'angle d'inclinaison latérale du bras (7) est constitué d'un vérin linéaire (22) monté entre le châssis et un point de fixation du moyen de rotation (2) sur ledit châssis.

7. Véhicule automoteur avec poste de conduite pour le nettoyage de voirie, par exemple une balayeuse de voirie ou tout autre véhicule multifonction pour le nettoyage de voirie, **caractérisé en ce qu'**il est équipé d'un dispositif porte-balai selon l'une des revendications 1 à 6, le pivotement du bras (7) et son blocage en position étant commandés depuis le poste de conduite du véhicule.

## Claims

1. Brush holding device for a road cleaning vehicle, for example for equipping road sweepers or any other automotive vehicle with multiple road cleaning functions, of the type comprising a motor driving a broom or a circular brush guided in rotation around a vertical axis, the device comprising:
- an arm (7) supporting a circular brush (5) and a first rotation means (1) allowing a 360° rotation of the brush (5) around its central vertical axis (6),
- a second rotation means (2) allowing the pivoting of the arm (7) supporting the circular brush (5) about a vertical direction,
- a means for controlling (3) the lateral angle of inclination of said arm (7) in relation to the vertical,
- a means for lifting (4) the brush, said lifting mans (4) being integral to said arm (7),
**characterised in that** the second rotation means (2) allows the pivoting of the arm (7) in vertical direction by an angle which can reach up to 360°,
the assembly of the means of the device acting in combination such that said brush can be pushed or pulled by the vehicle during its displacement.

2. Device according to claim 1, **characterised in that** the support arm (7) consists of a parallelogram system (10) that is deformable in a vertical plane, comprising two bars of fixed length (11, 12) mounted pivotably on the one hand on a vertical support (13) supporting the axis (6) and on the other hand on an attachment (14) of the second rotation means.

3. Device according to claim 2, **characterised in that** the lifting of the brush relative to the ground is controlled by a linear screw (15) mounted between an upper bar (11) of the parallelogram system (10) and a vertical support (13) of the vertical central axis (6) of the brush (5).

4. Device according to one of claims 1 to 3, **characterised in that** the brush holding device comprises a retracting spring of the brush in the case of frontal shock.

5. Device according to one of claims 1 to 4, **characterised in that** the second means of rotation (2) is in the form of a rotary screw (17).

6. Device according to one of claims 1 to 5, **characterised in that** the control means (3) of the lateral angle of inclination of the arm (7) is in the form of a linear screw (22) mounted between the chassis and a securing point of the means of rotation (2) on said chassis.

7. Automotive vehicle with a drive station for road cleaning, for example a road sweeper or any other multifunctional vehicle for road cleaning, **characterised in that** its is equipped with a brush holding device according to any one of claims 1 to 6, the pivoting of the arm (7) and its locking in position being controlled from the driving station of the vehicle.

## Patentansprüche

1. Bürstenhaltevorrichtung für ein Straßenreinigungsfahrzeug, das zum Ausstatten von beispielsweise Straßenkehrmaschinen oder jedem anderen selbstfahrenden Fahrzeug zur multifunktionalen Reinigung von Straßen dient, mit einem Motor, der einen kreisförmigen Besen oder eine kreisförmige Bürste antreibt, die um eine vertikale Achse zur Drehung antreibbar sind, wobei die Vorrichtung
- einen Arm (7), der eine kreisförmige Bürste (5) und ein erstes Drehmittel (1) trägt, das eine Drehung der Bürste (5) um ihre zentrale vertikale Achse (6) um 360° gestattet,
- ein zweites Drehmittel (2), das ein Schwenken des die kreisförmige Bürste (5) tragenden Armes (7) um eine vertikale Richtung gestattet,
- ein Einstellmittel (3) für den seitlichen Neigungswinkel des Armes (7) in Bezug auf die Vertikale und
- ein Anhebemittel (4) für die Bürste aufweist, wobei das Anhebemittel (4) in dem Arm (7) integriert ist,
**dadurch gekennzeichnet, dass** das zweite Drehmittel (2) ein Schwenken des Armes (7) um die vertikale Richtung entsprechend einem bis zu 360° reichenden Winkel gestattet, wobei die Gesamtheit der Mittel der Vorrichtung zusammenwirken, um den Besen durch das Fahrzeug während dessen Bewegung zu schieben oder zu ziehen.

2. Vorrichtung nach Anspruch 1, **dadurch gekennzeichnet, dass** der Trägerarm (7) durch ein in einer Vertikalebene verformbares Parallelogrammsystem (10) gebildet ist, das zwei Stangen mit einer festen Länge (11, 12) aufweist, die zum einen um einen die Achse (6) haltenden vertikalen Träger (13) und zum anderen um eine Fixierung (14) des zweiten Drehmittels schwenkbar angebracht sind.

3. Vorrichtung nach Anspruch 2, **dadurch gekennzeichnet, dass** das Anheben der Bürste in Bezug auf den Boden durch einen Linearzylinder (15) gesteuert ist, der zwischen einer oberen Stange (11) des Parallelogrammsystems (10) und einem vertikalen Träger (13) der vertikalen Zentralachse (6) der Bürste (5) angebracht ist.

4. Vorrichtung nach einem der Ansprüche 1 bis 3, **dadurch gekennzeichnet, dass** die Bürstenhaltevorrichtung im Fall einer Frontalkollision eine Rückzugsfeder für den Besen aufweist.

5. Vorrichtung nach einem der Ansprüche 1 bis 4, **dadurch gekennzeichnet, dass** das zweite Drehmittel (2) durch einen Drehzylinder (17) gebildet ist.

6. Vorrichtung nach einem der Ansprüche 1 bis 5, **dadurch gekennzeichnet, dass** das Einstellmittel (3) des seitlichen Neigungswinkels des Armes (7) durch einen Linearzylinder (22) gebildet ist, der zwischen dem Rahmen und einem Befestigungspunkt des Drehmittels (2) an dem Rahmen angebracht ist.

7. Selbstfahrendes Fahrzeug mit einem Steuerstand für die Straßenreinigung, beispielsweise eine Straßenkehrmaschine oder ein beliebiges anderes multifunktionales Fahrzeug für die Straßenreinigung, **dadurch gekennzeichnet, dass** es mit einer Bürstenhaltevorrichtung gemäß einem der Ansprüche 1 bis 6 ausgestattet ist, wobei das Schwenken des Armes (7) und dessen stellungsmäßiges Festlegen von dem Steuerstand des Fahrzeugs gesteuert wird.
